# EUROPEAN PATENT SPECIFICATION

(11) **EP 0 597 263 B1**
(45) Date of publication and mention of the grant of the patent: **20.08.1997**
(21) Application number: 93116464.4
(22) Date of filing: 12.10.1993
(51) Int. Cl.: F02F 7/00, F01B 1/12, F02B 61/02

(54) **Engine of modular construction**
Hubkolbenmaschine nach dem Baukastenprinzip
Moteur de combustion de construction modulaire

(30) Priority: 13.11.1992 IT BO920406
(43) Date of publication of application: 18.05.1994
(73) Proprietor: ITALJET S.p.A., 40068 San Lazzaro di Savena (Bologna) (IT)
(72) Inventor: Tartarini, Leopoldo, I-40069 San Lazzaro di Savena, Bologna (IT)
(74) Representative: Porsia, Attilio, Dr.

(56) References cited:
- DE-A- 2 044 943
- FR-A- 961 447
- US-A- 1 423 365
- US-A- 4 606 310
- US-A- 4 714 061

## Description

The invention relates to an engine, particularly for motor scooters or for motor vehicles having a small or medium cylinder capacity of the type in which the crankcase of a single-cylinder engine is formed by two parts connected together by means of studs, and defining a void formed by complementary recesses, in which the piston rod and crank assembly is housed. On the said crankcase the cylinder is fitted above said void by means of studs.

From FR-A- 961 447 a modular engine for motor vehicles is known comprising a plurality of single cylinder modules each formed by a pair of symmetrical crankcase halves having formed integral therewith the coresponding cylinder half, which modules may be assembled together by means of bolts so as to form multiple cylinder engines.

From US-A-4 606 310 an engine is known in which the cylinder block assembly is affixed to the forward edge of the main casing of the engine.

The scope of the invention is to provide a module which is apt to be associated to the two parts which normally constitute the crankcase of a single-cylinder engine so as to form a composite crankcase which may be used for the manufacture of multiple-cylinder engines.

According to one aspect of the invention, a multi cylinder engine for motor vehicles is provided having a small or medium cylinder capacity, comprising a crankcase and a plurality of cylinders carried by the said crankcase, in which the said crankcase comprises two symmetrical separated portions provided with opposing recesses and forming the void which houses the piston rod and crank assembly, and which normally constitute the crankcase of a single-cylinder engine, characterized by the feature that at least one module provided with two further opposing recesses complementary to the recesses and open on opposite sides and at the top is inserted between said crankcase portions and connected thereto by means of rods, the said components of the cranckcase being provided at their tops with studs to enable corresponding cylinders identical to those of single-cylinders engines, to be secured on said voids.

Further characteristics of the invention, and the advantages derived therefrom, will be more clearly understood from the following description of a preferred embodiment of the invention, illustrated purely by way of example and without restriction in the figures of the single attached sheet of drawings, in which:
Figure 1 is a plan view of the crankcase of an existing single-cylinder engine for motor scooters without the cylinder;
Figure 2 is a plan view of a module which, when assembled with the parts of the crankcase of the engine shown in Figure 1, enables a multiple-cylinder engine to be made;
Figure 3 is a partial plan view of the crankcase of a two-cylinder engine produced by the combination of the parts in Figure 1 and Figure 2, and
Figure 4 is a schematic transverse section of a two-cylinder engine as shown in Figure 3, in section along the line IV-IV.

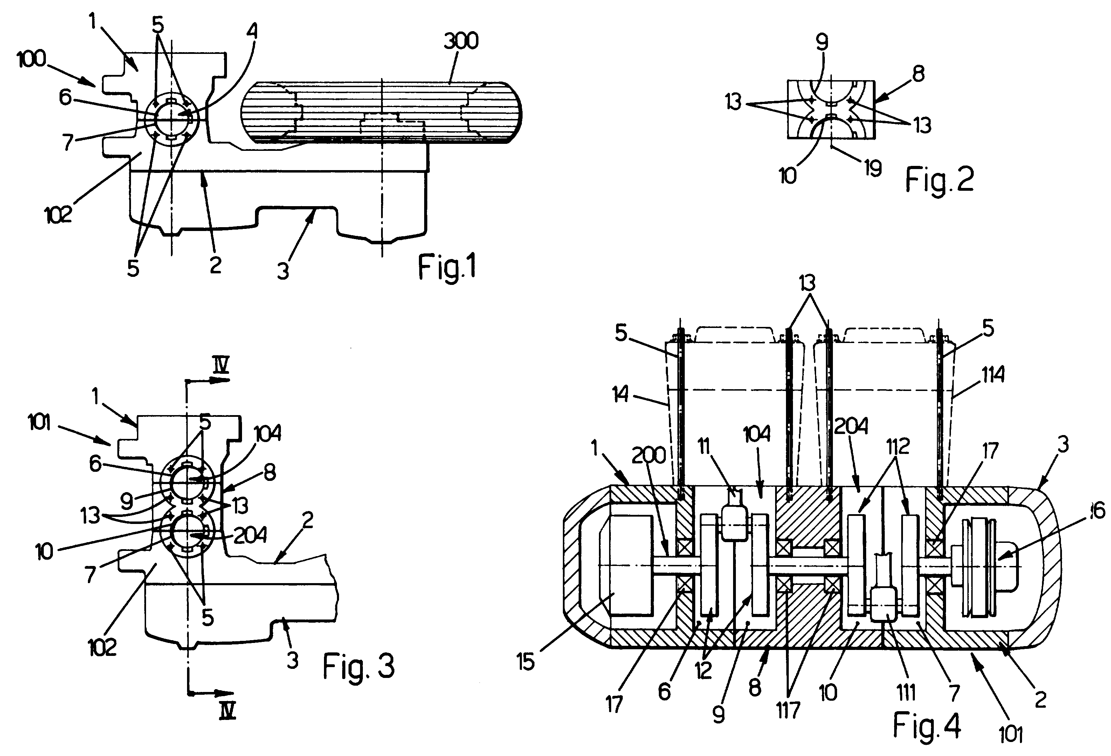

In Figure 1, 100 indicates the crankcase of a single-cylinder engine of the type widely used in existing motor scooters which, according to a very widespread solution, is made up of three parts 1, 2, 3 joined together in planes parallel to each other and perpendicular to the axis of rotation of the crankshaft. The part 1, adjacent and joined to the part 102 of the part 2 to form one unit, by means of rods which are not illustrated, forms the actual crankcase of the engine, with the void 4 which houses the piston rod and crank assembly (not illustrated) and on which the cylinder (not illustrated) is fitted by means of studs 5 associated with the said parts 1, 102. The void 4 is formed by complementary recesses 6 and 7 which face each other, are open at their tops, and are formed in the said parts 1, 102. The crankshaft (not illustrated), mounted in the crankcase 100 in Figure 1, has its ends projecting from the supports associated with the parts 1, 102 to permit the connection to it, at one end, of the flywheel and magneto assembly (not illustrated), housed in an external recess of the part 1 and covered by a suitable cover, and, at the other end, of the transmission to the rear wheel 300 of the motor scooter, carried with a cantilever arrangement by the rear end of the part 2. The transmission and gear change assembly (not illustrated) is housed in a case made up of two opposing shells, one of which is formed by the part 2 and the other by the part 3. In Figure 2, 8 indicates a module formed by the same method and with the same material as the said parts 1, 2 and 3, and provided with two opposing recesses 9 and 10, open on opposite sides of the module and at the top, the module being designed so that it can be interposed and enclosed between the said parts 1, 102 to form one unit, as in the example in Figures 3 and 4, producing the following condition: the recess 9 faces and is joined to the recess 6 of the part 1, and the recess 10 faces and is joined to the recess 7 of the part 102, to produce two aligned and identical voids 104, 204 capable of housing the corresponding piston rods 11, 111 coupled to corresponding cranks 12, 112 which have suitably differing alignments and which form part of a single crankshaft 200 made in any suitable way. The module 8 is provided with through holes (not illustrated) for the passage of the rods for joining it to the parts 1, 102 to form one unit, and has at its top, in the recesses 9 and 10, studs 13 which in combination with the studs 5 provided on the parts 1 and 102 of the engine crankcase enable the two cylinders 14, 114, which may for example be identical to those used in the single-cylinder engine, to be fixed on the voids 104, 204. Since the voids 104, 204 are identical to the void 4 of the crankcase 100 in Figure 1, it is possible to use many parts of the single-cylinder engine of the known type for the two-cylinder engine with the crankcase 101 as shown in Figures 3 and 4, with evident advantages of economy and simplification of the operating cycle of engines of any cylinder capacity. In Figure 4, 15 indicates the flywheel and magneto and 16 indicates the transmission and gear change assembly which can be appropriately designed to match the power of the two-cylinder engine. The crankshaft of the two-cylinder engine, which is also appropriately designed to match the power of the engine thus produced, can be supported not only at its ends, by the conventional frame bearings or bushes 17 carried by the parts 1, 102, but also in its intermediate part by one or more similar frame bearings or bushes 117 carried by the module 8. With the method described it is possible to produce engines with more than two adjacent cylinders, by joining two or more modules 8 to each other side by side, in a solution which is evident and easily produced and consequently not illustrated in the attached drawings. The constructional details of the through holes in the module 8 for holding it to other modules and/or to the parts 1, 102 to form one unit, and the details of the machining of the ends of the recesses 9, 10 for sealed interaction with the cylinders of the engine and with any transfer ports of the cylinders, have been omitted from the description, since they are evident and easily produced by persons skilled in the art. Finally, it is to be understood that many variations and modifications may be made to the invention, particularly as regards construction, and relating for example to the fact that the opposing recesses 9 and 10 of the module 8 may lie at an angle to the ideal vertical plane containing the axis 19 of Figure 2, so that they form, in combination with the parts 1 and 102, a crankcase for two-cylinder or multiple-cylinder engines of the V disposition or other non-in-line disposition of the cylinders.

## Claims

1. Multi cylinder engine for motor vehicles having a small or medium cylinder capacity, comprising a crankcase (101) and a plurality of cylinders (14, 114) carried by the said crankcase, in which the said crankcase comprises two symmetrical separated portions (1, 102) provided with opposing recesses (6) and (7) forming the void (4) which houses the piston rod and crank assembly, and which normally constitute the crankcase of a single-cylinder engine, characterized by the fact that at least one module (8) provided with two further opposing recesses (9, 10) complementary to the recesses (6, 7) and open on opposite sides and at the top is inserted between said crankcase portions (1, 102) and connected thereto by means of rods, the said components of the crankcase being provided at their tops with studs (13, 5) to enable corresponding cylinders (14, 114) identical to those of single-cylinder engines, to be secured on said voids.

2. Engine according to Claim 1, in which the intermediate module (8) of the crankcase is designed to hold frame bearings or bushes (118) for the intermediate support of the crankshaft (200) of the said engine.

3. Engine according to Claim 1, characterized by the use of two or more adjacent intermediate modules (8) to produce a crankcase for engines with three or more cylinders.

4. Engine according to Claim 1, in which the opposing recesses (9, 10) of the intermediate module of the crankcase (101) are orientated so that an engine with a plurality of cylinders in line can be produced.

5. Engine according to Claim 1, in which the opposing recesses (9, 10) of the intermediate module (8) of the crankcase (101) are orientated so that an engine with a plurality of cylinders with a V disposition or other suitable disposition can be produced.

## Patentansprüche

1. Mehrzylindrige Maschine für Motor- Fahrzeuge mit einer kleinen oder mittleren Zylinder- Kapazität, enthaltend ein Kurbelgehäuse (101) und eine Mehrzahl von Zylindern (14, 114) getragen von dem besagten Kurbelgehäuse, in der das besagte Kurbelgehäuse zwei symmetrische getrennte Bereiche (1, 102) beinhaltet, versehen mit gegenüber liegenden Aussparungen (6) und (7) bildend die Öffnung (4), die die Kolbenstange und die Kurbelanordnung aufnimmt, und die normalerweise das Kurbelgehäuse einer einzylindrischen Maschine bildet, gekennzeichnet durch die Tatsache, daß mindestens ein Modul (8) versehen mit zwei weiteren gegenüber liegenden Aussparungen (9, 10) sich ergänzend mit den Aussparungen (6, 7) und offen an gegenüberliegenden Seiten und an der Oberseite zwischen besagte Bereiche (1, 102) des Kurbelgehäuses eingefügt ist und daran mittels Stangen verbunden ist, wobei die besagten Komponenten des Kurbelgehäuses an ihren Oberseiten mit Stehbolzen (13, 5) versehen sind, um die zugehörigen Zylinder (14, 114) identisch mit denjenigen einer einzylindrischen Maschine an den besagten Öffnungen festzulegen.

2. Maschine gemäß Anspruch 1, in der der zwischenliegende Modul (8) des Kurbelgehäuses dazu gestaltet ist, Rahmen- Kugellager oder Laufbuchsen (118) für die zwischenliegende Abstützung der Kurbelwelle (200) der besagten Maschine zu halten.

3. Maschine gemäß Anspruch 1, gekennzeichnet durch die Benutzung von zwei oder mehr benachbarten zwischenliegenden Modulen (8) zur Herstellung eines Kurbelwellengehäuses für Maschinen mit drei oder mehr Zylindern.

4. Maschine gemäß Anspruch 1, in der die gegenüberliegenden Aussparungen (9, 10) des zwischenliegenden Modules des Kurbelwellengehäuses (101) derart orientiert sind, daß eine Maschine mit einer Mehrzahl von Zylindern in Reihe hergestellt werden kann.

5. Maschine gemäß Anspruch 1, in der die gegenüberliegenden Aussparungen (9, 10) des zwischenliegenden Modules des Kurbelwellengehäuses (101) derart orientiert sind, daß eine Maschine mit einer Mehrzahl von Zylindern in einer V-förmigen Anordnung oder anderen passenden Anordnung hergestellt werden kann.

## Revendications

1. Moteur à plusieurs cylindres pour véhicules à moteur de petite ou moyenne cylindrée, comprenant un carter-moteur (101) et une pluralité de cylindres (14, 114) portés par ledit carter-moteur, dans lequel ledit carter-moteur comprend deux parties séparées symétriques (1, 102) comportant des évidements opposés (6) et (7) formant le vide (4) qui loge l'ensemble d'embiellage, et qui constituent normalement le carter-moteur d'un moteur monocylindre, caractérisé par le fait qu'au moins un module (8), muni de deux évidements opposés supplémentaires (9, 10) complémentaires des évidements (6, 7) et ouverts sur leurs côtés opposés et au sommet, est inséré entre lesdites parties de carter-moteur (1, 102) et est relié à celles-ci au moyen de tiges filetées, lesdits composants du carter-moteur étant munis à leur sommet de goujons (13, 5) afin de permettre de fixer sur lesdits vides, des cylindres correspondants (14, 114) identiques à ceux de moteurs monocylindres.

2. Moteur selon la revendication 1, dans lequel le module intermédiaire (8) du carter-moteur est conçu de façon à maintenir des paliers ou des douilles (118) destinés au support intermédiaire du vilebrequin (200) dudit moteur.

3. Moteur selon la revendication 1, caractérisé par l'utilisation de deux ou plusieurs modules intermédiaires adjacents (8) afin de réaliser un carter-moteur destiné à des moteurs à trois cylindres ou davantage.

4. Moteur selon la revendication 1, dans lequel les évidements opposés (9, 10) du module intermédiaire du carter-moteur (101) sont orientés de façon que l'on puisse réaliser un moteur comportant une pluralité de cylindres en ligne.

5. Moteur selon la revendication 1, dans lequel les évidements opposés (9, 10) du module intermédiaire (8) du carter-moteur (101) sont orientés de façon que l'on puisse réaliser un moteur comportant une pluralité de cylindres disposés en V ou suivant une autre disposition convenable.
